# EUROPEAN PATENT SPECIFICATION

(11) **EP 3 321 237 B1**
(45) Date of publication and mention of the grant of the patent: **10.03.2021**
(21) Application number: 16820985.6
(22) Date of filing: 19.05.2016
(51) Int. Cl.: C03C 3/068, C03C 3/23, G02B 1/00

(54) **OPTICAL GLASS, GLASS PREFORM AND OPTICAL COMPONENT**
OPTISCHES GLAS, GLASVORFORM UND OPTISCHE KOMPONENTE
VERRE OPTIQUE, PRÉFORME DE VERRE ET ÉLÉMENT OPTIQUE

(30) Priority: 07.07.2015 JP 2015136321
(43) Date of publication of application: 16.05.2018
(73) Proprietor: Sumita Optical Glass, Inc., Saitama-shi 330-8565 (JP)
(72) Inventor: TSUCHIYA, Koichi, Saitama-shi Saitama 330-8565 (JP); YUKI, Toshinori, Saitama-shi Saitama 330-8565 (JP)
(74) Representative: Carpmaels & Ransford LLP
(86) International application number: PCT/JP2016/002450
(87) International publication number: WO 2017/006505

(56) References cited:
- JP-A- H0 316 932
- JP-A- S5 215 510
- JP-A- H05 193 978
- JP-A- H07 118 033
- JP-A- S56 169 150
- JP-A- 2001 510 771
- JP-A- 2013 063 888
- JP-A- 2014 043 390
- US-A- 2 456 033

## Description

### TECHNICAL FIELD

The present invention relates to an optical glass, a glass preform, and an optical element.

### BACKGROUND

With recent picture quality enhancement of optical products such as a camera, a demand for high precision optical systems has increased. One essential way of meeting such demand is the use of a glass having medium to high refractive index and low dispersibility.

Further, with recent increase in demand for security systems, a demand for security camera lenses has increased. Here, it is important that a glass to be used for a security camera lens have high transmittance in a near-infrared region for its application.

Under these circumstances, various studies have been conducted for mass production of a glass having the above-mentioned excellent properties.

For example, Patent Literature (PTL) 1 discloses an optical glass with a refractive index of greater than or equal to 1.70 and an Abbe index greater than or equal to 48, which is obtained by including SiO₂, B₂O₃, La₂O₃, ZnO, ZrO₂, and F⁻ as essential components and adjusting the respective compositions thereof to be in a predetermined range.

Further, PTL 2 discloses an optical glass comprising, as essential components, SiO₂, B₂O₃, La₂O₃, Gd₂O₃, Li₂O, and F in specific amounts, and being substantially free of As₂O₃, which has a high refractive index and low dispersion characteristics, and is also excellent in inner quality.

Furthermore, PTL 3 discloses an optical glass which has B₂O₃, LiO₂, Gd₂O₃, and LaF₃ as essential components with the compositions thereof each being in a predetermined range, so as to have high refractive index and low dispersion (refractive index and Abbe number falling within a region defined by three points A (1.700, 58.5), B (1.700, 47.5), and C (1.765, 47.5) in an orthogonal coordinate system where the x-axis represents the Abbe number (vd) and the y-axis represents the refractive index (nd)). PTL 4 discloses an optical glass for precision press molding, said to have good chemical durability and optical constants, i.e. a sag temperature (At) of at most 550°C, a refractive index (nd) of 1.625 to 1.690 and an Abbe number (vd) of at least 57, which can be subjected to precision press molding at a temperature of at most 600°C and thus is useful for the production of an aspherical lens, which has a chemical composition (% by weight) comprising: SiO₂ 2 to 13 %, B₂O₃ 11 to 25 %, SiO₂ + B₂O₃ 23 to 30 %, LaF₃ 5 to 30 %, Gd₂O₃ 4 to 13 %, Y₂O₃ 4 to 13 %, BaF₂ 22 to 45 %, Li₂O 0 to 6 %, LiF 0 to 8 %, Li₂O + LiF 0.5 to 8 %.

PTL 5 discloses obtaining optical glass said to have a high value of Abbe's number to the refractive index and satisfactory devitrification resistance by using B₂O₃-La₂O₃- Gd₂O3-RO glass as basic glass and adding F as a substitute component for O in the glass. This glass contains ME (metallic elements), O and F, and the ME are shown as oxides as follows: by wt., 25-48% B₂O₃, 20-56% La₂O₃, 1-37% Gd₂O₃, 0-15% MgO, 0-25% CaO, 0-28% SrO, 0-28% BaO, 0-17% ZnO, 0-6% SiO₂, 0-6% GeO₂, 0-6% ZrO, 0-3% SnO₂, 0-6% Al₂O₃, 0-2% in total of one or more among Li₂O₃, Na₂O and K₂O, and 0-0.5% As₂O₃ and/or Sb₂O₃. In the composition the total amount of La₂O₃ and Gd₂O₃ is 28-64%, and that of one or more among MgO, CaO, SrO, BaO and ZnO is 0.5-28%. F is contained by 2-21wt% as a substitute component for part of said oxides.

### CITATION LIST

### Patent Literature

PTL 1: JPS59169952A
PTL 2: JP2005170782A
PTL 3: JP0316932A
PTL 4 EP 0552932 A1
PTL 5 JP S56 169150 A

### SUMMARY

### (Technical Problem)

However, the optical glass disclosed in PTL 1 actually has an Abbe number of about 53 at most, and thus, there is still a margin for improvement in terms of low dispersibility.

Further, the optical glass disclosed in PTL 2 actually has an Abbe number of about 53 at most, and such relatively high Abbe number is achieved by including Yb₂O₃ that has absorption in the near-infrared region. Therefore, the glass disclosed in PTL 2 has a margin for improvement in terms of at least low dispersibility and transmittance in the near-infrared region.

Further, the optical glass disclosed in PTL 3 has insufficient refractive index when the Abbe number is relatively high (close to the point A in the above-mentioned orthogonal coordinate system), and the Abbe number itself is far from sufficiently large. Therefore, the optical glass disclosed in PTL 3 has a margin for improvement in terms of at least a balance between refractive index and dispersibility.

It could therefore be helpful to provide an optical glass having high refractive index and low dispersibility, and having high transmittance in the near-infrared region. Further, it could also be helpful to provide a high performance glass preform and optical element each employing the optical glass.

### (Solution to Problem)

Through our extensive research, we have found that B₂O₃ and LaF₃ may be included as essential components without including a Zn component and a component having absorption in the near-infrared region, and the total content of La₂O₃, Gd₂O₃, and Y₂O₃ and the total content of LaF₃, GdF₃, and YF₃ may be optimized, to thereby obtain an optical glass having high refractive index and low dispersibility, and having high transmittance in the near-infrared region.

That is, the optical glass of the present disclosure has a composition consisting of, by mass%:
SiO₂: 0% or more and 8% or less;
B₂O₃: 15% or more and 35% or less;
La₂O₃: 0% or more and 50% or less;
Gd₂O₃: 0% or more and 50% or less;
Y₂O₃: 0% or more and 20% or less;
LaF₃: 10% or more and 60% or less;
GdF₃: 0% or more and 20% or less;
YF₃: 0% or more and 20% or less;
Li₂O: 0% or more and less than 3%;
LiF: 0% or more and 5% or less;
NaF: 0% or more and 3% or less;
BaO: 0% or more and 5% or less;
MgF₂: 0% or more and 5% or less;
CaF₂: 0% or more and 10% or less;
SrF₂: 0% or more and 25% or less;
BaF₂: 0% or more and 30% or less;
AlF₃: 0% or more and 5% or less;
Ta₂O₅: 0% or more and 5% or less;
ZrO₂: 0% or more and 5% or less; and
Nb₂O₅: 0% or more and 3% or less,
in which:
   a total ratio of La₂O₃, Gd₂O₃, and Y₂O₃ is 11% or more and 62% or less;
   a total ratio of LaF₃, GdF₃, and YF₃ is 10% or more and 60% or less;
   a total ratio of Li⁺ and Na⁺ is 0% or more and 1.35% or less by mass%;
   the optical glass contains no Zn²⁺; and
   the optical glass contains no component having absorption in the near-infrared region. The disclosed optical glass has high refractive index and low dispersibility, and has high transmittance in the near-infrared region.

Further, the disclosed optical glass has an Abbe number (vd) and a refractive index (nd) falling within a region defined by line segments A-B, B-C, C-D, and D-A sequentially connecting points A (56.0, 1.755), B (54.0, 1.755), C (60.0, 1.650), and D (63.0, 1.650) in an orthogonal coordinate system where the x-axis represents the Abbe number (vd) and the y-axis represents the refractive index (nd). The disclosed optical glass has high refractive index and very low dispersibility.

A glass preform of the present disclosure uses the disclosed optical glass. The disclosed glass preform is highly efficient.

An optical element of the present invention uses the disclosed optical glass. The optical element is highly efficient.

### (Advantageous Effect)

The present disclosure provides an optical glass having high refractive index and low dispersibility, and having high transmittance in the near-infrared region. Further, the present disclosure provides a high performance glass preform and optical element each employing the disclosed optical glass.

### BRIEF DESCRIPTION OF THE DRAWINGS

In the accompanying drawings:
FIG. 1 is a graph illustrating a range representing the Abbe number (vd) and the refractive index (nd) of an optical glass according to one embodiment of the present disclosure; and
FIG. 2 is a graph illustrating measurement results of light transmittance of an optical glass according to one embodiment of the present disclosure and an optical glass according to a comparative example.

### DETAILED DESCRIPTION

### (Optical glass)

The disclosed optical glass will be specifically described below.

### <Components>

To start with, a description is given of a reason to limit the glass composition of the optical glass to the above-mentioned predetermined range in the present disclosure. It should be noted that "%" expressions regarding the components refer to mass% unless otherwise specified.

### [SiO₂]

SiO₂ is an optional component in the disclosed optical glass and is a component capable of forming a network structure of glass. Introduction of only a small amount of SiO₂ imparts an effect of improving devitrification resistance. However, the SiO₂ ratio exceeding 8% in the optical glass increases melting temperature, and SiO₂ vaporizes during melting, which may deteriorate the quality. Therefore, the SiO₂ ratio in the disclosed optical glass is set to 0% or more and 8% or less. From a similar point of view, the SiO₂ ratio in the disclosed optical glass is preferably 7% or less, and more preferably 6% or less.

### [B₂O₃]

B₂O₃ is an essential component in the disclosed optical glass and is a main component capable of forming a network structure of the glass. Further, B₂O₃ is effective for improving devitrification resistance of the optical glass. However, the B₂O₃ ratio exceeding 35% in the optical glass causes problems such as deterioration in the quality due to vaporization, or significant increase in change over time of the refractive index during glass manufacture in the case where fluorine coexists. On the other hand, the B₂O₃ ratio falling below 15% hinders sufficient improvement of devitrification resistance. Therefore, the B₂O₃ ratio in the disclosed optical glass is set to 15% or more and 35% or less. From a similar point of view, the B₂O₃ ratio in the disclosed optical glass is preferably 16% or more, more preferably 16.5% or more, and preferably 30% or less, more preferably less than 25%.

Here, the disclosed optical glass preferably has a total ratio of SiO₂ and B₂O₃ of 32% or less. The total ratio of SiO₂ and B₂O₃ being 32% or less allows a higher level of balance between high refractive index and low dispersibility, to thereby fulfill requirements.

### [La₂O₃]

La₂O₃ is an effective component for achieving high refractive index and low dispersibility simultaneously. However, the La₂O₃ ratio exceeding 50% in the optical glass deteriorates devitrification resistance and hinders industrialization of the optical glass. Therefore, the La₂O₃ ratio in the disclosed optical glass is set to 0% or more and 50% or less. From a similar point of view, the La₂O₃ ratio in the disclosed optical glass is preferably 40% or less, and more preferably 35% or less.

### [Gd₂O₃]

Similarly to La₂O₃, Gd₂O₃ is an effective component for achieving high refractive index and low dispersibility simultaneously. However, the Gd₂O₃ ratio exceeding 50% in the optical glass causes a problem of deterioration in devitrification resistance. Therefore, the Gd₂O₃ ratio in the disclosed optical glass is set to 0% or more and 50% or less. From a similar point of view, the Gd₂O₃ ratio in the disclosed optical glass is preferably 45% or less, and more preferably 43% or less.

### [Y₂O₃]

Similarly to La₂O₃ and Gd₂O₃, Y₂O₃ is an effective component for achieving high refractive index and low dispersibility simultaneously. However, the Y₂O₃ ratio exceeding 20% in the optical glass causes a problem of deterioration in devitrification resistance. Therefore, the Y₂O₃ ratio in the disclosed optical glass is set to 0% or more and 20% or less. From a similar point of view, the Y₂O₃ ratio in the disclosed optical glass is preferably 17% or less, and more preferably 15% or less. Further, from a viewpoint of enhancing melting property of a raw material mixture and shortening a melting time for improving workability and manufacturability, the Y₂O₃ ratio in the disclosed optical glass is preferably 0.1% or more.

Here, the disclosed optical glass needs to have a total ratio of La₂O₃, Gd₂O₃, and Y₂O₃ of 11% or more and 62% or less. When the above-mentioned total ratio falls below 10%, it hinders achievement of high refractive index and low dispersibility. On the other hand, when the above-mentioned total ratio exceeds 62%, it deteriorates devitrification resistance. Note that, the total ratio of La₂O₃, Gd₂O₃, and Y₂O₃ in the disclosed optical glass is more preferably 12% or more from a viewpoint of more reliably achieving favorable refractive index and dispersibility, and preferably 60% or less and more preferably 59% or less from a viewpoint of further suppressing deterioration in devitrification resistance.

### [LaF₃]

LaF₃ is an essential component in the disclosed optical glass. LaF₃ contains a rare earth component (La), and thus is effective for achieving high refractive index and low dispersibility. Further, LaF₃ includes fluorine, and fluorine tends to lower the refractive index but is also capable of lowering the dispersibility, as compared with oxygen. Furthermore, compared with oxygen, fluorine has a dramatically powerful effect of maintaining the devitrification resistance of glass containing a large amount of rare earth components. As a result, while contents of oxides such as SiO₂, B₂O₃ forming glasses are suppressed low, contents of rare earth components may be increased to impart an effect of improving devitrification resistance. Therefore, use of LaF₃ allows for efficient manufacture of glass having favorable devitrification resistance, high refractive index, and low dispersibility. Here, for obtaining the above-mentioned effects, the LaF₃ ratio in the optical glass must be 10% or more, and for more reliably obtaining the above-mentioned effects, the LaF₃ ratio in the optical glass is preferably 11% or more, and more preferably 12% or more. On the other hand, for preventing adverse effects on devitrification resistance, the LaF₃ ratio in the optical glass must be 60% or less, preferably 56% or less, and more preferably 54% or less.

### [GdF₃]

Similarly to LaF₃, GdF₃ is an effective component for achieving high refractive index and low dispersibility. However, the GdF₃ ratio exceeding 20% in the optical glass causes a problem of deterioration in devitrification resistance. Therefore, the GdF₃ ratio in the disclosed optical glass is set to 0% or more and 20% or less. From a similar point of view, the GdF₃ ratio in the optical glass is preferably 18% or less, and more preferably 15% or less.

### [YF₃]

Similarly to LaF₃ and GdF₃, YF₃ is an effective component for achieving high refractive index and low dispersibility. However, the YF₃ ratio exceeding 20% in the optical glass causes a problem of deterioration in devitrification resistance. Therefore, the YF₃ ratio in the disclosed optical glass is set to 0% or more and 20% or less. From a similar point of view, the YF₃ ratio in the optical glass is preferably 18% or less, and more preferably 15% or less.

Here, the disclosed optical glass needs to have a total ratio of LaF₃, GdF₃, and YF₃ of 10% or more and 60% or less. When the above-mentioned total ratio falls below 10%, it means that at least the LaF₃ ratio also falls below 10%, which hinders efficient manufacture of glass having favorable devitrification resistance, high refractive index, and low dispersibility. On the other hand, when the above-mentioned total ratio exceeds 60%, it imparts adverse effects on devitrification resistance. Note that, the total ratio of LaF₃, GdF₃, and YF₃ in the disclosed optical glass is preferably 11% or more and more preferably 12% from a viewpoint of efficiently manufacturing glass having favorable devitrification resistance, high refractive index, and low dispersibility, and preferably 58% or less and more preferably 55% or less from a viewpoint of further suppressing deterioration in devitrification resistance.

### [Li₂O]

Li₂O is an optional component in the disclosed optical glass and is an effective component for enhancing glass melting property and lowering a glass transition temperature (Tg). However, a Li₂O ratio in the optical glass of 3% or more hinders obtaining desired refractive index and dispersibility (Abbe number), particularly dispersibility (Abbe number). Therefore, the Li₂O ratio in the disclosed optical glass is set to be 0% or more and less than 3%. From a similar point of view, the Li₂O ratio in the disclosed optical glass is preferably 2.5% or less, and more preferably 2% or less.

### [LiF]

LiF has similar effects to Li₂O, and also serves as a source of fluorine. However, the LiF ratio exceeding 5% in the optical glass hinders obtaining desired refractive index and dispersibility (Abbe number). Therefore, the LiF ratio in the disclosed optical glass is set to 0% or more and 5% and less. From a similar point of view, the LiF ratio in the disclosed optical glass is preferably 4.8% or less, and more preferably 4.6% or less.

### [NaF]

NaF has similar effects to Li₂O, and also serves as a source of fluorine. However, the NaF ratio exceeding 3% in the optical glass hinders obtaining the desired refractive index and dispersibility (Abbe number). Therefore, the NaF ratio in the disclosed optical glass is set to 0% or more and 3% and less. From a similar point of view, the NaF ratio in the disclosed optical glass is preferably 2% or less, and more preferably 1% or less.

### [BaO]

BaO is an optional component in the disclosed optical glass and is a component effective for adjusting the melting property or refractive index of the glass. However, the BaO ratio exceeding 5% in the optical glass hinders obtaining sufficiently high refractive index. Therefore, the BaO ratio in the disclosed optical glass is set to 0% or more and 5% or less. From a similar point of view, the BaO ratio in the disclosed optical glass is preferably 4.5% or less, and more preferably 4% or less.

### [MgF₂]

MgF₂ is an optional component in the disclosed optical glass, which is effective for adjusting the melting property or refractive index of the glass and also serves as a source of fluorine. However, the MgF₂ ratio exceeding 5% in the optical glass hinders obtaining the desired refractive index and dispersibility (Abbe number). Therefore, the MgF₂ ratio in the disclosed optical glass is set to 0% or more and 5% or less. From a similar point of view, the MgF₂ ratio in the disclosed optical glass is preferably 4% or less, and more preferably 3% or less.

### [CaF₂]

CaF₂ is also an optional component in the disclosed optical glass, which is effective for adjusting the melting property or refractive index of the glass and also serves as a source of fluorine. However, the CaF₂ ratio exceeding 10% in the optical glass hinders obtaining the desired refractive index and dispersibility (Abbe number). Therefore, the CaF₂ ratio in the disclosed optical glass is set to 0% or more and 10% or less. From a similar point of view, the CaF₂ ratio in the disclosed optical glass is preferably 8% or less, and more preferably 7% or less.

### [SrF₂]

SrF₂ is also an optional component in the disclosed optical glass, which is effective for adjusting the melting property or refractive index of the glass and also serves as a source of fluorine. However, the SrF₂ ratio exceeding 25% in the optical glass hinders obtaining the desired refractive index and dispersibility (Abbe number). Therefore, the SrF₂ ratio in the disclosed optical glass is set to 0% or more and 25% or less. From a similar point of view, the SrF₂ ratio in the disclosed optical glass is preferably 23% or less, and more preferably 21% or less.

### [BaF₂]

BaF₂ is also an optional component in the disclosed optical glass, which is effective for adjusting the melting property or refractive index of the glass and also serves as a source of fluorine. However, the BaF₂ ratio exceeding 30% in the optical glass hinders obtaining the desired refractive index and dispersibility (Abbe number). Therefore, the BaF₂ ratio in the disclosed optical glass is set to 0% or more and 30% or less. From a similar point of view, the BaF₂ ratio in the disclosed optical glass is preferably 27% or less, and more preferably 25% or less.

### [AlF₃]

AlF₃ is an optional component in the disclosed optical glass and also serves as a source of fluorine. However, the AlF₃ ratio exceeding 5% in the optical glass hinders obtaining the desired refractive index and dispersibility (Abbe number). Therefore, the AlF₃ ratio in the disclosed optical glass is set to 0% or more and 5% or less. From a similar point of view, the AlF₃ ratio in the disclosed optical glass is preferably 4% or less, and more preferably 2.5% or less.

### [Ta₂O₅]

Ta₂O₅ is an optional component in the disclosed optical glass and is a component capable of improving chemical durability and enhancing refractive index while maintaining relatively low dispersibility. However, the Ta₂O₅ ratio exceeding 5% in the optical glass hinders obtaining the desired refractive index and dispersibility (Abbe number). Therefore, the Ta₂O₅ ratio in the disclosed optical glass is set to 0% or more and 5% or less. From a similar point of view, the Ta₂O₅ ratio in the disclosed optical glass is preferably 4% or less, and more preferably 3% or less.

### [ZrO₂]

ZrO₂ is an optional component in the disclosed optical glass, and similarly to Ta₂O₅, capable of improving the chemical durability and enhancing the refractive index while maintaining relatively low dispersibility. However, the ZrO₂ ratio exceeding 5% in the optical glass may cause an unmelted residue, failing to provide an optical glass having the desired properties. Therefore, the ZrO₂ ratio in the disclosed optical glass is set to 0% or more and 5% or less. From a similar point of view, the Ta₂O₅ ratio in the disclosed optical glass is preferably 4% or less, and more preferably 3% or less.

### [Nb₂O₅]

Nb₂O₅ is an optional component in the disclosed optical glass and capable of significantly enhancing the refractive index. However, the Nb₂O₅ ratio exceeding 3% in the optical glass causes high dispersibility, which hinders obtaining glass having the desired low dispersibility. Therefore, the Nb₂O₅ ratio in the disclosed optical glass is set to 0% or more and 3% or less. From a similar point of view, the Nb₂O₅ ratio in the disclosed optical glass is preferably 2% or less, and more preferably 1.5% or less.

### [Total of Li⁺ and Na⁺]

Further, the disclosed optical glass needs to have a total ratio of Li⁺ and Na⁺ of 0% or more and 1.35% and less in mass%. Herein, the cation ratio is represented as a mass ratio of cations with respect to the entire glass. When the above-mentioned ratio exceeds 1.35%, it hinders achieving the desired refractive index and dispersibility (Abbe number). Note that the total ratio of Li⁺ and Na⁺ in the disclosed optical glass is preferably 1.3% or less, and more preferably 1.25% or less from a viewpoint of more reliably obtaining the desired refractive index and dispersibility (Abbe number).

Here, Li₂O, LiF, and the like may be used as the raw materials of the optical glass, to thereby contain Li⁺ in the optical glass. Further, Na₂O, NaF, and the like may be used, to thereby contain Na⁺ in the optical glass.

### [F⁻]

Further, the disclosed optical glass preferably has a F⁻ ratio of 9% or less by anion%. Herein, the anion ratio is represented as a mass ratio of anions with respect to the entire glass. The above-mentioned ratio of 9% or less provides an optical glass having higher refractive index while maintaining low dispersibility.

Here, fluorides such as LaF₃, GdF₃, YF₃, LiF, NaF, MgF₂, CaF₂, SrF₂, BaF₂, and AlF₃ may be used as as raw materials of the optical glass, to thereby contain F⁻ in the optical glass.

### [Zn²⁺]

Note that, the disclosed optical glass contains no Zn²⁺ as cations. In other words, the disclosed optical glass contains no component composed of Zn. An optical glass containing Zn²⁺ in addition to the above-mentioned composition fails to achieve sufficiently-favorable low dispersibility. Further, an optical glass containing Zn²⁺ may have deteriorated light transmittance at shorter wavelengths of, for example, 300 nm to 400 nm.

Here, in general, the optical glass contains Zn²⁺ when components such as ZnO and ZnF₂ are used as raw materials. Therefore, the disclosed optical glass can be obtained without using components such as ZnO and ZnF₂ as raw materials.

### [Components having absorption in near-infrared region]

Further, the disclosed optical glass contains no component having absorption in the near-infrared region. An optical glass containing a component having absorption in the near-infrared region suffers reduction in transmittance in the near-infrared region, failing to be obtained as an optical glass having the desired properties.

Here, specific examples of components having absorption in the near-infrared region include Yb₂O₃, CoO, CuO, Fe₂O₃, and NiO. Note that, Yb₂O₃ has no absorption in the visible light region.

### <Abbe number and refractive index>

The disclosed optical glass having the above-mentioned composition has an Abbe number (vd) and a refractive index (nd) within a region defined by line segments A-B, B-C, C-D, and D-A sequentially connecting points A (56.0, 1.755), B (54.0, 1.755), C (60.0, 1.650), and D (63.0, 1.650) in an orthogonal coordinate system where the x-axis represents the Abbe number and the y-axis represents the refractive index. An optical glass having an Abbe number and a refractive index within the above-mentioned region has high refractive index and very low dispersibility. In general, the total ratio of SiO₂ and B₂O₃ may be set to 32% or less while satisfying the requirements for the aforementioned components, to thereby allow the Abbe number and the refractive index of the optical glass to be adjusted to fall within the above-mentioned region.

Further, the disclosed optical glass more preferably has an Abbe number (vd) and a refractive index (nd) falling within a region defined by line segments A-B, B-E, E-F, and F-A sequentially connecting points A (56.0, 1.755), B (54.0, 1.755), E (55.8, 1.724), and F (58.0, 1.720) in an orthogonal coordinate system where the x-axis represents the Abbe number and the y-axis represents the refractive index. An optical glass having an Abbe number and a refractive index falling within the above-mentioned region have extremely highly balanced high refractive index and low dispersibility. An exemplary method of adjusting the Abbe number and the refractive index of an optical glass to fall within the above-mentioned region may include, for example, setting the total ratio of SiO₂ and B₂O₃ to 32% or less and setting an F⁻ ratio to 9% or less while satisfying the requirements for the aforementioned components.

### <Transmittance in near-infrared region>

From a viewpoint of using the disclosed optical glass for manufacture of security camera lenses and the like, the optical glass preferably has high transmittance in the near-infrared region. Specifically, the disclosed optical glass has light transmittance of preferably 80% or more, and more preferably 85% or more, at a wavelength of 800 nm to 1100 nm at a thickness of 5 mm. In general, the requirements regarding the above-mentioned components may be satisfied, to thereby adjust the light transmittance of the optical glass to fall within the above-mentioned range.

### <Manufacturing method>

The disclosed optical glass may be manufactured by any method without particular limitation, and any conventional manufacturing method may be used, as long as the optical glass satisfies the requirements regarding the above-mentioned components.

For example, oxides, hydroxides, fluorides, carbonates, nitrates, and the like are prepared as raw materials for the respective components, each weighed to a predetermined ratio, and mixed sufficiently to prepare a mixture of glass raw materials. Next, the mixture of raw materials is loaded into a heat resistant container, such as a platinum crucible, having no reactivity with glass raw materials and the like, and heated to 1000°C to 1200°C and melted while being stirred adequately in an electric furnace, so as to be refined and homogenized. Then, the resultant is cast into a mold preheated to a suitable temperature and gradually cooled in the electric furnace, to thereby produce the disclosed optical glass. Here, for improving coloring or defoaming of the glass, a trace amount (0.1% or less, for example) of an industrially-known defoaming component such as Sb₂O₃ may be added to the raw materials.

### (Glass preform)

A glass preform of the present disclosure is obtained by using the disclosed optical glass. The glass preform as used herein refers to a glass material to be subjected to mold press forming and a glass material preformed in a suitable form before press forming. The disclosed glass preform is obtained by using an optical glass having high refractive index, low dispersibility, and high transmittance in the near-infrared region, and thus is highly efficient.

The glass preform may be in any shape without particularly limited. Further, a manufacturing method for the glass preform is not particularly limited and may be arbitrarily selected depending on the purpose, and examples thereof include: (1) a method including the steps of heating, softening, and dropping, to thereby obtain a glass preform; (2) a method including the steps of cutting and polishing, to thereby obtain a glass preform; and (3) a method including the steps of heating, softening, dropping, and further the steps of cutting and polishing thereafter, to thereby obtain a glass preform.

Further, the disclosed optical glass may be used, to thereby suitably obtain, for example, a preformed glass material to be used for a well-known precision press forming method, that is, a glass preform for mold press forming.

From a viewpoint of obtaining the desired properties, the disclosed glass preform preferably meets at least the requirements, and even preferred requirements regarding the components, which have already been described for the disclosed optical glass.

### (Optical element)

An optical element of the present disclosure is obtained by using the disclosed optical glass. Then, the disclosed optical element is obtained by using an optical glass having high refractive index, low dispersibility, and high transmittance in the near-infrared region, and thus is highly efficient. The optical element is not particularly limited, but typical examples thereof include: a lens such as an aspherical lens, a spherical lens, a planoconcave lens, a planoconvex lens, a biconcave lens, a biconvex lens, a convex meniscus lens, or a concave meniscus lens; a microlens; a lens array; a microlens array; a diffractive lens; a prism; and a prism lens. Preferred examples of the optical element include: a lens such as a convex meniscus lens, a concave meniscus lens, a biconvex lens, a biconcave lens, a planoconvex lens, or a planoconcave lens; a prism; and a diffraction grating. Each of the above-mentioned lenses may be an aspherical lens or a spherical lens.

Further, from a viewpoint of application, the disclosed optical element may serve as a lens or prism to be included in an image optical system such as a security camera or a vehicle mounted camera, a lens or prism to be included in a projection optical system such as a projector, and the like. Among these, the disclosed optical glass may be suitably used for manufacturing a lens or prism to be included in a security camera.

The disclosed optical element may be obtained by, for example, subjecting a strip material (plate-like hot formed product) formed from the disclosed optical glass or the disclosed glass preform mentioned above to cold working such as grinding, polishing, or the like, or to mold press forming.

From a viewpoint of obtaining the desired properties, the disclosed optical element preferably meets at least the requirements, and even preferred requirements regarding the components described for the disclosed optical glass.

### EXAMPLES

Hereinafter, the optical glass of the present disclosure will be described specifically by way of Examples and Comparative Examples. However, the present disclosure is not limited to these Examples.

For obtaining optical glasses with composition ratios described in Tables 1 to 3, oxides, hydroxides, fluorides, carbonates, nitrates, and the like as raw materials for respective components were vitrified, and the vitrified products were weighed to 100 g, sufficiently mixed, loaded into a platinum crucible, heated 1000°C to 1200°C in an electric furnace, and melted for 1 to 2 hours while being stirred adequately to be homogenized. Then, the refined molten product was cast into a preheated mold and gradually cooled in the electric furnace to remove strain, to thereby obtain optical glasses of Examples 1 to 41 and Comparative Examples 1 to 3, respectively.

Then, the optical glasses were each measured for the refractive index (nd) and the Abbe number (vd).

In addition, the optical glasses of Example 13 and Comparative Example 1 were measured for the light transmittance.

Further, for Examples 15 and 16, the time required from the start of heating after placing the platinum crucible in the electric furnace to the completion of melting of the raw material mixtures in the crucible was measured through visual inspection. As a result, Example 15 required 10 minutes for complete melting, while Example 16 required 15 minutes for complete melting, as an unmelted residue of the mixture was still observed after the lapse of 10 minutes.

Here, the refractive index and the Abbe number were measured using "KPR-2000", manufactured by Shimadzu Device Corporation.

The light transmittance was measured using "U-4100" manufactured by Hitachi High-Technologies Corporation, in a wavelength range of 300 nm to 1200 nm, for an optical glass sample prepared in a size of 30 mm × 13 mm with a thickness of 5 mm, having both surfaces optically polished.

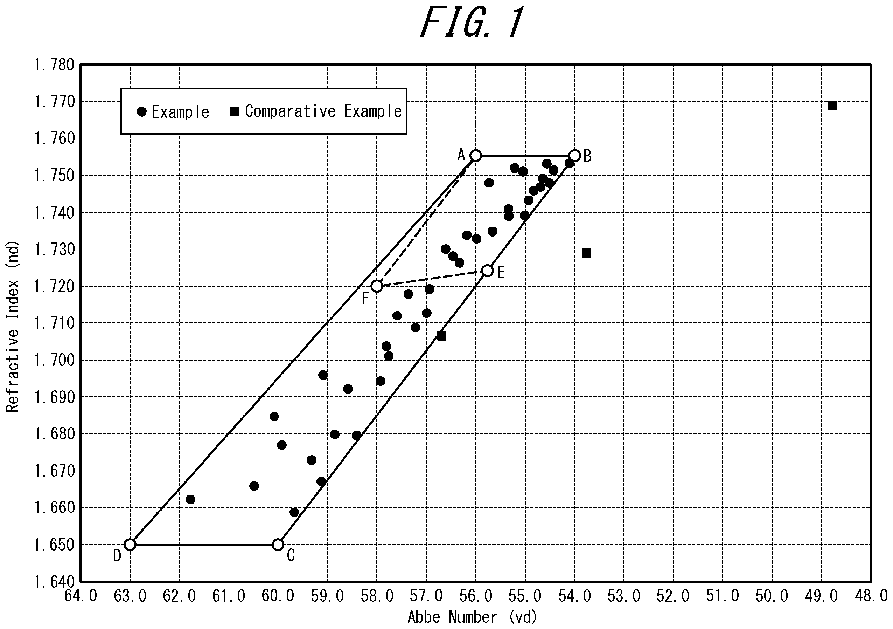

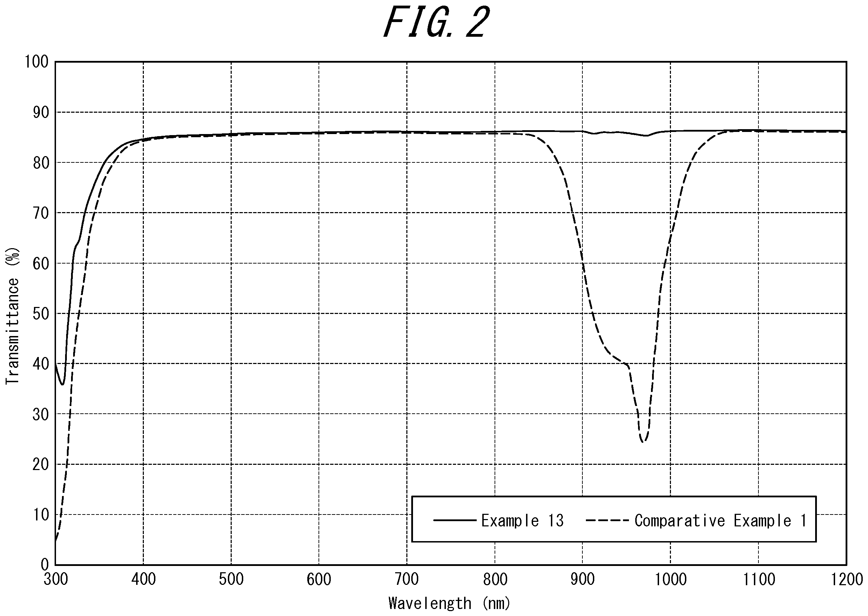

Tables 1 to 3 illustrate the measurement results of the refractive index and the Abbe number, which are plotted in an orthogonal coordinate system of FIG. 1. Also, FIG. 2 illustrates the measurement results of the light transmittance.

**[Table 1]**

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 |
|---|---|---|---|---|---|---|---|---|---|---|---|---|---|---|---|---|
| SiO₂ | | | 0.50 | 1.50 | 0.70 | 1.50 | 1.50 | 2.00 | 1.00 | 1.00 | 1.00 | 1.00 | 2.00 | 2.00 | 2.00 | 1.50 |
| B₂O₃ | | 27.50 | 27.50 | 26.50 | 27.00 | 27.50 | 27.40 | 26.00 | 27.00 | 25.50 | 25.50 | 25.50 | 21.50 | 20.50 | 20.50 | 21.00 |
| La₂O₃ | | 16.00 | 16.00 | 19.00 | 16.00 | 16.00 | 15.90 | 20.00 | 24.00 | 16.00 | 16.00 | 21.00 | 21.00 | 21.00 | 21.00 | 21.00 |
| Gd₂O₃ | | 26.50 | 26.00 | 26.00 | 28.80 | 25.00 | 24.90 | 31.00 | 32.50 | 25.00 | 25.00 | 25.00 | 31.00 | 31.00 | 31.00 | 26.00 |
| Y₂O₃ | | | | | | | | | | | | | | 1.00 | 0.50 | 6.00 |
| LaF₃ | | 30.00 | 30.00 | 27.00 | 27.00 | 30.00 | 29.80 | 20.00 | 15.00 | 30.00 | 30.00 | 27.00 | 23.00 | 23.00 | 23.00 | 23.00 |
| GdF₃ | | | | | | | | | | | | | | | | |
| YF₃, | | | | | | | | | | | | | | | | |
| Ta₂O₅ | | | | | | | | | | | | | | | | |
| Li₂O | | | | | | | | 0.50 | 0.50 | 0.50 | 0.50 | 0.50 | 0.50 | 0.50 | 0.50 | 0.50 |
| LiF | | | | | 0.50 | | | | | | | | | | | |
| NaF | mass% | | | | | | | | | | | | | | | |
| BaO | | | | | | | | 0.50 | | | 2.00 | | | | 0.50 | |
| MgF₂ | | | | | | | | | | | | | | | | |
| CaF₂ | | | | | | | | | | | | | | | | |
| SrF₂ | | | | | | | | | | | | | | | | |
| BaF₂ | | | | | | | | | | | | | | | | |
| AlF₃ | | | | | | | | | | | | | | | | |
| ZrO₂ | | | | | | | | | | 2.00 | | | 1.00 | 1.00 | 1.00 | 1.00 |
| Nb₂O₅ | | | | | | | 0.50 | | | | | | | | | |
| ZnO | | | | | | | | | | | | | | | | |
| TiO₂ | | | | | | | | | | | | | | | | |
| Sb₂O₃ | | | | | | | | | | | | | | | | |
| Yb₂O₃ | | | | | | | | | | | | | | | | |
| As₂O₃ | | | | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| F⁻ | mass% | 8.73 | 8.73 | 7.86 | 8.22 | 8.73 | 8.67 | 5.82 | 4.36 | 8.73 | 8.73 | 7.86 | 6.69 | 6.69 | 6.69 | 6.69 |
| Li⁺ | mass% | 0.00 | 0.00 | 0.00 | 0.13 | 0.00 | 0.00 | 0.23 | 0.23 | 0.23 | 0.23 | 0.23 | 0.23 | 0.23 | 0.23 | 0.23 |
| Na⁺ | | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| Li⁺ + Na⁺ | | 0.00 | 0.00 | 0.00 | 0.13 | 0.00 | 0.00 | 0.23 | 0.23 | 0.23 | 0.23 | 0.23 | 0.23 | 0.23 | 0.23 | 0.23 |
| La₂O₃+Gd₂O₃+Y₂O₃ | mass% | 42.5 | 42.0 | 45.0 | 44.8 | 41.0 | 40.8 | 51.0 | 56.5 | 41.0 | 41.0 | 46.0 | 52.0 | 53.0 | 52.5 | 53.0 |
| LaF₃+GdF₃,+YF₃ | | 30.00 | 30.00 | 27.00 | 27.00 | 30.00 | 29.80 | 20.00 | 15.00 | 30.00 | 30.00 | 27.00 | 23.00 | 23.00 | 23.00 | 23.00 |
| SiO₂+B₂O₃ | | 27.5 | 28.0 | 28.0 | 27.7 | 29.0 | 28.9 | 28.0 | 28.0 | 26.5 | 26.5 | 26.5 | 23.5 | 22.5 | 22.5 | 22.5 |
| Refractive Index (nd) | | 1.7476 | 1.7489 | 1.7533 | 1.7348 | 1.7334 | 1.7407 | 1.7326 | 1.7390 | 1.7264 | 1.7280 | 1.7300 | 1.7429 | 1.7456 | 1.7456 | 1.7474 |
| Abbe Number (vd) | | 55.75 | 54.66 | 54.12 | 55.71 | 56.20 | 55.36 | 56.01 | 55.03 | 56.35 | 56.48 | 56.63 | 54.95 | 54.86 | 54.82 | 54.51 |

**[Table 2]**

| | | Example 16 | Example 17 | Example 18 | Example 19 | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|---|---|---|
| SiO₂ | | 1.50 | 0.50 | 2.00 | 2.50 | 3.00 | 2.00 | | | | 4.51 | | | | | 1.42 |
| B₂O₃ | | 21.00 | 22.00 | 19.50 | 18.00 | 18.50 | 19.50 | 27.20 | 20.92 | 27.86 | 24.94 | 23.15 | 30.40 | 24.07 | 20.14 | 27.71 |
| La₂O₃ | | 16.00 | 19.20 | 16.00 | 16.00 | 17.00 | 16.20 | 11.12 | 15.57 | 16.90 | 5.43 | 22.68 | 8.54 | 27.02 | 28.28 | 13.42 |
| Gd₂O₃ | | 37.00 | 30.00 | 38.00 | 39.00 | 38.00 | 38.00 | 15.13 | 19.80 | 21.49 | 15.10 | 16.82 | 6.33 | 20.04 | 20.98 | 19.18 |
| Y₂O₃ | | | | | | | | | | | 4.70 | | | | | |
| LaF₃ | | 23.00 | 25.00 | 23.00 | 23.00 | 22.00 | 23.00 | 27.49 | 28.09 | 30.48 | 27.75 | 33.33 | 51.33 | 27.08 | 14.17 | 29.51 |
| GdF₃ | | | | | | | | | | | | | | | | |
| YF₃ | | | | | | | | | | | | | | | | |
| Ta₂O₅ | | | | | | | | | | | 1.84 | | | | | |
| Li₂O | | 0.50 | 0.30 | 0.50 | 0.50 | 0.50 | 0.30 | | | | 1.49 | | | | | |
| LiF | | | | | | | | | | 0.96 | 1.51 | 4.02 | 3.40 | 1.79 | 3.75 | 2.57 |
| NaF | mass% | | | | | | | | | | | | | | | 0.67 |
| BaO | | | 3.00 | | | | | | | | | | | | | |
| MgF₂ | | | | | | | | | | 2.31 | | | | | | |
| CaF₂ | | | | | | | | | 5.34 | | | | | | | |
| SrF₂ | | | | | | | | 19.06 | 4.29 | | | | | | | |
| BaF₂ | | | | | | | | | 5.99 | | 11.64 | | | | 12.68 | 5.52 |
| AlF₃ | | | | | | | | | | | | | | | | |
| ZrO₂ | | 1.00 | | 1.00 | 1.00 | 1.00 | 1.00 | | | | 1.09 | | | | | |
| Nb₂O₅ | | | | | | | | | | | | | | | | |
| ZnO | | | | | | | | | | | | | | | | |
| TiO₂ | | | | | | | | | | | | | | | | |
| Sb₂O₃ | | | | | | | | | | | | | | | | |
| Yb₂O₃ | | | | | | | | | | | | | | | | |
| As₂O₃ | | | | | | | | | | | | | | | | |
| Total | | 100.00 | 100.00 | 100.00 | 100.00 | 100.00 | 100.00 | 100.00 | 100.00 | 100.00 | 100.00 | 100.00 | 100.00 | 100.00 | 100.00 | 100.00 |
| F⁻ | mass% | 6.69 | 7.27 | 6.69 | 6.69 | 6.40 | 6.69 | 13.76 | 13.37 | 10.98 | 11.70 | 12.64 | 17.42 | 9.19 | 9.62 | 11.97 |
| Li⁺ | mass% | 0.23 | 0.14 | 0.23 | 0.23 | 0.23 | 0.14 | 0.00 | 0.00 | 0.26 | 1.10 | 1.08 | 0.91 | 0.48 | 1.00 | 0.69 |
| Na⁺ | | 0.00 | 0.00 | 0.00 | 0.00 | 0.00 | 0.00 | 0.00 | 0.00 | 0.00 | 0.00 | 0.00 | 0.00 | 0.00 | 0.00 | 0.37 |
| Li⁺ +Na⁺ | | 0.23 | 0.14 | 0.23 | 0.23 | 0.23 | 0.14 | 0.00 | 0.00 | 0.26 | 1.10 | 1.08 | 0.91 | 0.48 | 1.00 | 1.05 |
| La₂O₃+Gd₂O₃+Y₂O₃ | mass% | 53.0 | 49.2 | 54.0 | 55.0 | 55.0 | 54.2 | 26.3 | 35.4 | 38.4 | 25.2 | 39.5 | 14.9 | 47.1 | 49.3 | 32.6 |
| LaF₃+GdF₃+YF₃ | | 23.00 | 25.00 | 23.00 | 23.00 | 22.00 | 23.00 | 27.49 | 28.09 | 30.48 | 27.75 | 33.33 | 51.33 | 27.08 | 14.17 | 29.51 |
| SiO₂+B₂O₃ | | 22.5 | 22.5 | 21.5 | 20.5 | 21.5 | 21.5 | 27.2 | 20.9 | 27.9 | 29.5 | 23.2 | 30.4 | 24.1 | 20.1 | 29.1 |
| Refractive Index (nd) | | 1.7529 | 1.7390 | 1.7467 | 1.7507 | 1.7513 | 1.7516 | 1.6729 | 1.6793 | 1.7193 | 1.6671 | 1.7013 | 1.7120 | 1.7177 | 1.6622 | 1.6940 |
| Abbe Number (vd) | | 54.60 | 55.36 | 54.70 | 55.04 | 54.44 | 55.23 | 59.34 | 58.41 | 56.95 | 59.14 | 57.76 | 57.60 | 57.37 | 61.77 | 57.93 |

**[Table 3]**

| | | Example 31 | Example 32 | Example 33 | Example 34 | Example 35 | Example 36 | Example 37 | Example 38 | Example 39 | Example 40 | Example 31 | Comparative Example 1 | Comparative Example 2 | Comparative Example 3 |
|---|---|---|---|---|---|---|---|---|---|---|---|---|---|---|---|
| SiO₂ | | 1.40 | 1.27 | 3.00 | 4.87 | 2.38 | 2.31 | 0.80 | 0.76 | 1.37 | 1.31 | 1.46 | 4.59 | 2.4 | 4.92 |
| B₂O₃ | | 27.53 | 24.91 | 27.10 | 20.00 | 22.60 | 21.99 | 30.80 | 29.20 | 26.99 | 25.88 | 28.53 | 20.81 | 26.80 | 34.00 |
| La₂O₃ | | 13.34 | 12.07 | 23.11 | 16.05 | 15.87 | 15.43 | 9.24 | | 13.05 | 12.51 | 13.81 | 14.74 | 18.4 | 36.8 |
| Gd₂O₃ | | 19.06 | 17.25 | 13.26 | | | | | 18.88 | 18.69 | 17.91 | | 23.76 | 14.4 | 7.58 |
| Y₂O₃ | | | | | 10.75 | 10.63 | 10.34 | 11.20 | 10.62 | | | 12.31 | | 5.0 | 7.0 |
| LaF₃ | | 29.31 | 26.53 | 29.06 | 21.95 | 28.72 | 27.93 | 36.55 | 29.72 | 32.52 | 18.71 | 36.77 | 11.83 | 25.0 | 5.5 |
| GdF₃ | | | | | | | | | | | 13.63 | | | | |
| YF₃ | | | 13.01 | | | | | | | | | | | 5.0 | |
| Ta₂O₅ | | | | | | | | | | | | | 2.24 | | |
| Li₂O | | | | | | | | | | | | | 1.53 | 3.0 | |
| LiF | | 2.56 | | 4.47 | 2.84 | 2.80 | 2.25 | 3.06 | 2.90 | 2.01 | 1.16 | 1.47 | | | |
| NaF | mass% | | | | | | | | | | | | | | |
| BaO | | | | | | | | | | | | | | | |
| MgF₂ | | | | | | | | | | | | | | | |
| CaF₂ | | | | | | | | | | | | | | | |
| SrF₂ | | | | | | | | | | | 3.74 | | | | |
| BaF₂ | | 5.47 | 4.96 | | 23.54 | 16.99 | 19.74 | 8.36 | 7.92 | 5.36 | 5.14 | 5.66 | | | |
| AlF₃ | | 1.33 | | | | | | | | | | | | | |
| ZrO₂ | | | | | | | | | | | | | 5.1 | | 2.5 |
| Nb₂O₅ | | | | | | | | | | | | | | | |
| ZnO | | | | | | | | | | | | | 12.75 | | 1.4 |
| TiO₂ | | | | | | | | | | | | | 0.05 | | |
| Sb₂O₃ | | | | | | | | | | | | | 0.05 | | |
| Yb₂O₃ | | | | | | | | | | | | | 2.55 | | |
| As₂O₃ | | | | | | | | | | | | | | | 0.3 |
| Total | | 100.00 | 100.00 | 100.00 | 100.00 | 100.00 | 100.00 | 100.00 | 100.00 | 100.00 | 100.00 | 100.00 | 100.00 | 100.00 | 100.00 |
| F⁻ | mass% | 12.49 | 13.88 | 11.73 | 13.57 | 14.09 | 14.05 | 14.69 | 12.49 | 12.10 | 12.16 | 13.00 | 3.44 | 9.23 | 1.60 |
| Li⁺ | mass% | 0.69 | 0.00 | 1.20 | 0.76 | 0.75 | 0.60 | 0.82 | 0.78 | 0.54 | 0.31 | 0.39 | 0.71 | 1.39 | 0.00 |
| Na⁺ | | 0.00 | 0.00 | 0.00 | 0.00 | 0.00 | 0.00 | 0.00 | 0.00 | 0.00 | 0.00 | 0.00 | 0.00 | 0.00 | 0.00 |
| Li⁺ + Na⁺ | | 0.69 | 0.00 | 1.20 | 0.76 | 0.75 | 0.60 | 0.82 | 0.78 | 0.54 | 0.31 | 0.39 | 0.71 | 1.39 | 0.00 |
| La₂O₃+Gd₂O₃+Y₂O₃ | mass% | 32.4 | 29.3 | 36.4 | 26.8 | 26.5 | 25.8 | 20.4 | 29.5 | 31.7 | 30.4 | 26.1 | 38.5 | 37.8 | 51.38 |
| LaF₃+GdF₃+YF₃ | | 29.31 | 39.54 | 29.06 | 21.95 | 28.72 | 27.93 | 36.55 | 29.72 | 32.52 | 32.34 | 36.77 | 11.83 | 30.0 | 5.5 |
| SiO₂+B₂O₃ | | 28.9 | 26.2 | 30.1 | 24.9 | 25.0 | 24.3 | 31.6 | 30.0 | 28.4 | 27.2 | 30.0 | 25.4 | 29.2 | 38.92 |
| Refractive Index (nd) | | 1.6920 | 1.7126 | 1.6844 | 1.6588 | 1.6659 | 1.6619 | 1.6798 | 1.6767 | 1.7037 | 1.7086 | 1.6956 | 1.7690 | 1.7065 | 1.7287 |
| Abbe Number (vd) | | 58.60 | 57.01 | 60.09 | 59.67 | 60.48 | 64.08 | 58.86 | 59.94 | 57.82 | 57.24 | 59.10 | 48.80 | 56.70 | 53.78 |

As illustrated in Tables 1 to 3, the optical glasses of Examples 1 to 41 according to the present disclosure all have high refractive index and low dispersibility. Specifically, as depicted in FIG. 1, these optical glasses have Abbe numbers (vd) and refractive indexes (nd) within a region defined by line segments A-B, B-C, C-D, and D-A sequentially connecting points A (56.0, 1.755), B (54.0, 1.755), C (60.0, 1.650), and D (63.0, 1.650) in an orthogonal coordinate system where the x-axis represents the Abbe number (vd) and the y-axis represents the refractive index (nd).

In contrast, the optical glass of Comparative Example 1 is found to be at least poor in low dispersibility. In addition, the optical glass of Comparative Example 1 has remarkably deteriorated light transmittance at 300 nm to 400 nm as depicted in FIG. 2. These results may be considered attributable to ZnO contained in the optical glass.

Further, the optical glass of Comparative Example 2 is at least found to be ill-balanced between high refractive index and low dispersibility. This result may be considered attributable to excess Li₂O contained in the optical glass.

Furthermore, the optical glass of Comparative Example 3 is found to be at least poor in low dispersibility. This result may be considered attributable to ZnO contained in the optical glass, an insufficient content of LaF₃, an insufficient total content of LaF₃, GdF₃ and YF₃.

The optical glasses of Examples 1 to 41 according to the present disclosure all contain no components having absorption in the near-infrared region, and thus is observed to have high transmittance in the near-infrared region. This is also obvious from FIG. 2, where the optical glass of Comparative Example 1 containing Yb₂O₃, a component having absorption in the near-infrared region, suffers a significant drop in light transmittance at a wavelength of 800 to 1100 nm, while the optical glass of Example 13 containing no components having absorption in the near-infrared region has light transmittance stably maintained at 85% or more.

Example 15 and Example 16 differ from each other in whether Y₂O₃ is contained or not. Based on a comparison of time required for complete melting of these raw material mixtures, the use of Y₂O₃ can be found to accelerate complete melting and improve workability and manufacturability.

### INDUSTRIAL APPLICABILITY

The present disclosure provides an optical glass having high refractive index and low dispersibility and having high transmittance in the near-infrared region. Further, the present disclosure provides high a performance glass preform and optical element employing the optical glass.

## Claims

1. An optical glass having a composition consisting of, by mass%:
SiO₂: 0% or more and 8% or less;
La₂O₃: 0% or more and 50% or less;
B₂O₃: 15% or more and 35% or less;
Gd₂O₃: 0% or more and 50% or less;
Y₂O₃: 0% or more and 20% or less;
LaF₃: 10% or more and 60% or less;
GdF₃: 0% or more and 20% or less;
YF₃: 0% or more and 20% or less;
Li₂O: 0% or more and less than 3%;
LiF: 0% or more and 5% or less;
NaF: 0% or more and 3% or less;
BaO: 0% or more and 5% or less;
MgF₂: 0% or more and 5% or less;
CaF₂: 0% or more and 10% or less;
SrF₂: 0% or more and 25% or less;
BaF₂: 0% or more and 30% or less;
AlF₃: 0% or more and 5% or less;
Ta₂O₅: 0% or more and 5% or less;
ZrO₂: 0% or more and 5% or less; and
Nb₂O₅: 0% or more and 3% or less,
wherein:
a total ratio of La₂O₃, Gd₂O₃, and Y₂O₃ is 11% or more and 62% or less;
a total ratio of LaF₃, GdF₃, and YF₃ is 10% or more and 60% or less;
a total ratio of Li⁺ and Na⁺ is 0% or more and 1.35% or less by mass%;
the optical glass contains no Zn²⁺;
the optical glass contains no component having absorption in a near-infrared region; and
an Abbe number (vd) and a refractive index (nd) fall within a region defined by line segments A-B, B-C, C-D, and D-A sequentially connecting points A (56.0, 1.755), B (54.0, 1.755), C (60.0, 1.650), and D (63.0, 1.650) in an orthogonal coordinate system where the x-axis represents the Abbe number (vd) and the y-axis represents the refractive index (nd).

2. The optical glass according to claim 1, wherein the Abbe number (vd) and the refractive index (nd) fall within a region defined by line segments A-B, B-E, E-F, and F-A sequentially connecting points A (56.0, 1.755), B (54.0, 1.755), E (55.8, 1.724), and F (58.0, 1.720) in an orthogonal coordinate system where the x-axis represents the Abbe number and the y-axis represents the refractive index.

3. The optical glass according to claim 1 or 2, having a F⁻ ratio of 9% or less by anion%.

4. A glass preform comprising the optical glass according to any of claims 1 to 3.

5. An optical element comprising the optical glass according to any of claims 1 to 3.

## Patentansprüche

1. Optisches Glas mit einer Zusammensetzung, die, in Masse-%, aus Folgendem besteht:
SiO₂: 0% oder mehr und 8% oder weniger;
La₂O₃: 0% oder mehr und 50% oder weniger;
B₂O₃: 15% oder mehr und 35% oder weniger;
Gd₂O₃: 0% oder mehr und 50% oder weniger;
Y₂O₃: 0% oder mehr und 20% oder weniger;
LaF₃: 10% oder mehr und 60% oder weniger;
GdF₃: 0% oder mehr und 20% oder weniger;
YF₃: 0% oder mehr und 20% oder weniger;
Li₂O: 0% oder mehr und weniger als 3%;
LiF: 0% oder mehr und 5% oder weniger;
NaF: 0% oder mehr und 3% oder weniger;
BaO: 0% oder mehr und 5% oder weniger;
Mg₂O: 0% oder mehr und 5% oder weniger;
CaF₂: 0% oder mehr und 10% oder weniger;
SrF₂: 0% oder mehr und 25% oder weniger;
BaF₂: 0% oder mehr und 30% oder weniger;
AlF₃: 0% oder mehr und 5% oder weniger;
Ta₂O₅: 0% oder mehr und 5% oder weniger;
ZrO₂: 0% oder mehr und 5% oder weniger; und
Nb₂O₅: 0% oder mehr und 3% oder weniger;
wobei:
ein Gesamtverhältnis von La₂O₃, Gd₂O₃ und Y₂O₃ 11% oder mehr und 62% oder weniger beträgt;
ein Gesamtverhältnis von LaF₃, GdF₃ und YF₃ 10% oder mehr und 60% oder weniger beträgt;
ein Gesamtverhältnis von Li⁺ und Na⁺ in Masse-% 0% oder mehr und 1,35% oder weniger beträgt;
das optische Glas kein Zn²⁺ enthält;
das optische Glas keine Komponente mit einer Absorption in einem Nahinfrarot-Bereich enthält; und
eine Abbe-Zahl (vd) und ein Brechungsindex (nd) in einem Bereich liegen, der in einem orthogonalen Koordinatensystem, bei dem die x-Achse die Abbe-Zahl (vd) und die y-Achse den Brechungsindex (nd) darstellt, durch die Liniensegmente A-B, B-C, C-D und D-A, die nacheinander die Punkte A (56,0, 1,755), B (54,0, 1,755), C (60,0, 1,650) und D (63,0, 1,650) miteinander verbinden, definiert wird.

2. Optisches Glas nach Anspruch 1, wobei die Abbe-Zahl (vd) und der Brechungsindex (nd) in einem Bereich liegen, der in einem orthogonalen Koordinatensystem, bei dem die x-Achse die Abbe-Zahl und die y-Achse den Brechungsindex darstellt, durch die Liniensegmente A-B, B-E, E-F und F-A, die nacheinander die Punkte A (56,0, 1,755), B (54,0, 1,755), E (55,8, 1,724) und F (58,0, 1,720) miteinander verbinden, definiert wird.

3. Optisches Glas nach Anspruch 1 oder 2 mit einem F⁻-Verhältnis von 9% oder weniger, bezogen auf Anionen-%.

4. Glasvorform, umfassend das optische Glas nach einem der Ansprüche 1 bis 3.

5. Optisches Element, umfassend das optische Glas nach einem der Ansprüche 1 bis 3.

## Revendications

1. Verre optique possédant une composition constituée de, en % en masse :
SiO₂ : 0 % ou plus et 8 % ou moins ;
La₂O₃ : 0 % ou plus et 50 % ou moins ;
B₂O₃ : 15 % ou plus et 35 % ou moins ;
Gd₂O₃ : 0 % ou plus et 50 % ou moins ;
Y₂O₃ : 0 % ou plus et 20 % ou moins ;
LaF₃ : 10 % ou plus et 60 % ou moins ;
GdF₃ : 0 % ou plus et 20 % ou moins ;
YF₃ : 0 % ou plus et 20 % ou moins ;
Li₂O : 0 % ou plus et moins de 3 % ;
LiF : 0 % ou plus et 5 % ou moins ;
NaF : 0 % ou plus et 3 % ou moins ;
BaO : 0 % ou plus et 5 % ou moins ;
MgF₂ : 0 % ou plus et 5 % ou moins ;
CaF₂ : 0 % ou plus et 10 % ou moins ;
SrF₂ : 0 % ou plus et 25 % ou moins ;
BaF₂ : 0 % ou plus et 30 % ou moins ;
AlF₃ : 0 % ou plus et 5 % ou moins ;
Ta₂O₅ : 0 % ou plus et 5 % ou moins ;
ZrO₂ : 0 % ou plus et 5 % ou moins ; et
Nb₂O₅ : 0 % ou plus et 3 % ou moins,
un rapport total de La₂O₃, Gd₂O₃, et Y₂O₃ étant de 11 % ou plus et 62 % ou moins ;
un rapport total de LaF₃, GdF₃, et YF₃ étant de 10 % ou plus et 60 % ou moins ;
un rapport total de Li⁺ et Na⁺ étant de 0 % ou plus et 1,35 % ou moins en % en masse ;
le verre optique ne contenant pas de Zn²⁺;
le verre optique ne contenant pas de composant possédant une absorption dans la région du proche infrarouge ; et
un nombre d'Abbe (vd) et un indice de réfraction (nd) tombant dans une région définie par des segments de lignes A-B, B-C, C-D, et D-A connectant séquentiellement des points A (56,0, 1,755), B (54,0, 1,755), C (60,0, 1,650), et D (63,0, 1,650) dans un système de coordonnées orthogonales où l'axe x représente le nombre d'Abbe (vd) et l'axe y représente l'indice de réfraction (nd).

2. Verre optique selon la revendication 1, le nombre d'Abbe (vd) et l'indice de réfraction (nd) tombant dans une région définie par des segments de lignes A-B, B-E, E-F, et F-A connectant séquentiellement des points A (56,0, 1,755), B (54,0, 1,755), E (55,8, 1,724), et F (58,0, 1,720) dans un système de coordonnées orthogonales où l'axe x représente le nombre d'Abbe et l'axe y représente l'indice de réfraction.

3. Verre optique selon la revendication 1 ou 2, possédant un rapport de F⁻ de 9 % ou moins en % en anion.

4. Préforme de verre comprenant le verre optique selon l'une quelconque des revendications 1 à 3.

5. Élément optique comprenant le verre optique selon l'une quelconque des revendications 1 à 3.
